(19) Europäisches Patentamt / European Patent Office / Office européen des brevets

(11) **EP 3 384 550 B1**

(12) **FASCICULE DE BREVET EUROPEEN**

(45) Date de publication et mention
de la délivrance du brevet:
**19.02.2020 Bulletin 2020/08**

(21) Numéro de dépôt: **16765994.5**

(22) Date de dépôt: **15.09.2016**

(51) Int Cl.:
*H01M 10/0587* (2010.01)    *H01M 10/42* (2006.01)
*H01M 10/48* (2006.01)    *H01M 10/0525* (2010.01)

(86) Numéro de dépôt international:
**PCT/EP2016/071774**

(87) Numéro de publication internationale:
**WO 2017/092901 (08.06.2017 Gazette 2017/23)**

(54) **PROCÉDÉ DE RÉGÉNÉRATION DE CAPACITÉ D'UN ACCUMULATEUR ÉLECTROCHIMIQUE MÉTAL-ION, ACCUMULATEUR ASSOCIÉ**

VERFAHREN ZUR REGENERATION DER KAPAZITÄT EINES METAL-ION AKKUMULATORS UND ZUGEORDNETER AKKUMULATOR

PROCESS FOR THE CAPACITY-REGENERATION OF A METAL-ION ELECTROCHEMICAL ACCUMULATOR AND ASSOCIATED BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2015 FR 1561746**

(43) Date de publication de la demande:
**10.10.2018 Bulletin 2018/41**

(73) Titulaire: **Commissariat à l'Énergie Atomique et aux Énergies Alternatives
75015 Paris (FR)**

(72) Inventeurs:
• **BRUN-BUISSON, David
38470 Vatilieu (FR)**
• **DANIEL, Lise
38160 Saint-marcellin (FR)**
• **GENIES, Sylvie
38120 Saint-egreve (FR)**

(74) Mandataire: **Nony
11 rue Saint-Georges
75009 Paris (FR)**

(56) Documents cités:
**US-A1- 2011 041 324    US-A1- 2012 045 670**

**Description**

Domaine technique

La présente invention concerne le domaine des générateurs électrochimiques métal-ion, qui fonctionnent selon le principe d'insertion ou de désinsertion, ou autrement dit intercalation- désintercalation, d'ion métal dans au moins une électrode.

Elle concerne plus particulièrement un accumulateur électrochimique au lithium, de type Li-ion, comportant au moins une cellule électrochimique constituée d'une anode (électrode négative) et d'une cathode (électrode positive) de part et d'autre d'un séparateur imprégné d'électrolyte, la cellule étant enroulée sur elle-même autour d'un axe d'enroulement, deux collecteurs de courant dont un est relié à l'anode et l'autre à la cathode, et un boitier agencé pour loger la cellule électrochimique enroulée avec étanchéité tout en étant traversée par une partie des collecteurs de courant formant les bornes de sortie, aussi appelés pôles.

L'invention vise à proposer une méthode et des moyens associés de régénération de la capacité des générateurs électrochimiques.

Par « régénération de capacité », on entend ici et dans le cadre de l'invention, la récupération de la capacité perdue d'un accumulateur dimensionnée initialement avec les matériaux des électrodes de la (des) cellule(s) qui le constituent), c'est-à-dire du niveau de courant initial pouvant être extrait en une période de temps donnée.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

Etat de la technique

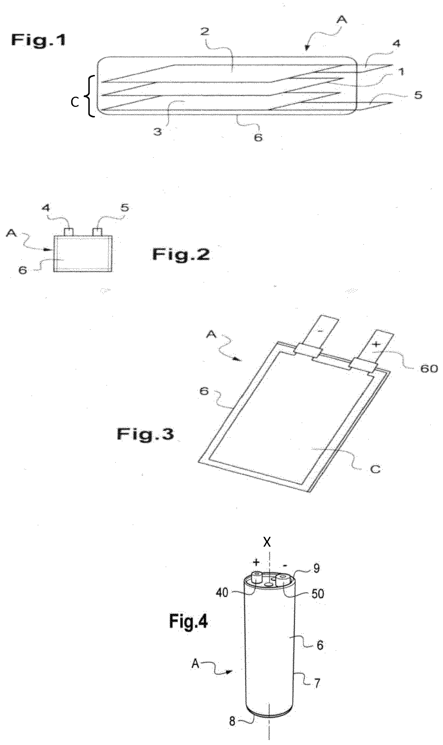

Telle qu'illustrée schématiquement en figures 1 et 2, une batterie ou accumulateur lithium-ion A comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,

- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous ces deux dernières formes, le constituant peut comprendre un séparateur, sous la forme d'un ou plusieurs films, en polymère ou en composite microporeux, imbibé d'électrolyte (s) organique (s) ou de type liquide ionique qui permet le déplacement des ions Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement $LiPF_6$.

L'électrode positive ou cathode 2 est constituée de matériaux d'insertion du cation Lithium qui sont en général composite, comme le phosphate de fer lithié $LiFePO_4$, l'oxyde de cobalt lithié $LiCoO_2$, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, ou l'oxyde de nickel cobalt aluminium lithié.

L'électrode négative ou anode 3 est très souvent constituée de carbone, graphite ou en $Li_4TiO_5O_{12}$ (matériau titanate), éventuellement également à base de silicium ou à base de lithium, ou à base de métaux tels que l'étain, l'antimoine et de leurs alliages ou de composite formé à base de silicium.

L'anode 3 et la cathode 2 en matériau d'insertion au Lithium peuvent être déposées selon une technique usuelle sous la forme d'une couche active sur une feuille métallique constituant un collecteur de courant.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement autour de 3,6 Volt.

Selon le type d'application visée, on cherche à réaliser soit un accumulateur lithium-ion fin et flexible, soit un accumulateur rigide : l'emballage est alors soit souple, soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à $10^{-6}$ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

Aussi, à ce jour un emballage rigide utilisé est constitué d'un boitier métallique, généralement en un métal léger et peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des boitiers réalisés en acier recouvert d'un revêtement bimétal en cuivre/nickel ont déjà été envisagés dans la demande de brevet WO 2010/113502.

Des boitiers en matière plastique rigide, en particulier intégralement en polymère ont également déjà été envisagés, en particulier dans la demande de brevet US 2010/316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

L'avantage principal des emballages rigides est leur étanchéité élevée et maintenue au cours du temps du fait que la fermeture des boitiers est réalisée par soudure, en générale par soudure au laser.

La géométrie de la plupart des boitiers d'accumulateurs Li-ion est cylindrique, car la plupart des cellules électrochimiques des accumulateurs sont enroulées par bobinage selon une géométrie cylindrique autour d'un axe d'enroulement aussi dénommé usuellement mandrin. Des formes prismatiques de boitiers ont également déjà été réalisées avec enroulement autour d'un mandrin de forme prismatique.

Un des types de boitier rigide de forme cylindrique, usuellement fabriqué pour un accumulateur Li-ion de forte capacité et à durée de vie supérieure à 10 ans, est illustré en figure 4.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle. Le boitier 6 est au potentiel de la borne positive 40.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Le fonctionnement d'un accumulateur ou batterie lithium-ion (Li-ion) repose sur le principe d'oxydo-réduction réversible des matériaux d'anode (électrode négative) et cathode (électrode positive) qui les composent par une insertion/désinsertion d'ions lithium en leur sein. Cette propriété permet à la batterie de stocker de l'énergie sous forme électrochimique.

Par exemple, au cours d'une charge, il se produit une désinsertion des ions lithium de la cathode avec leur insertion dans les même quantités dans l'anode, et vice-et-versa au cours de la décharge. La quantité d'ions lithium utilisée au cours de ces processus d'insertion est directement proportionnelle à la capacité de l'accumulateur ou batterie.

Dans le cas particulier d'un accumulateur Li-ion à anode en graphite, du fait de son potentiel en fin de charge très bas, au-dessous de 500mV vs $Li^+/Li$, il est connu qu'une partie du lithium inséré à l'état échangeable est consommée au cours de la première charge de l'accumulateur, appelée « étape de formation ». Cela a pour effet d'entrainer la création d'un film de passivation (SEI, acronyme anglais pour « *Solid-Electrolyte-Interphase* »), et de consommer du lithium échangeable, c'est-à-dire apte à être inséré/désinséré. De ce fait, la capacité de l'accumulateur chute proportionnellement avec cette consommation de lithium.

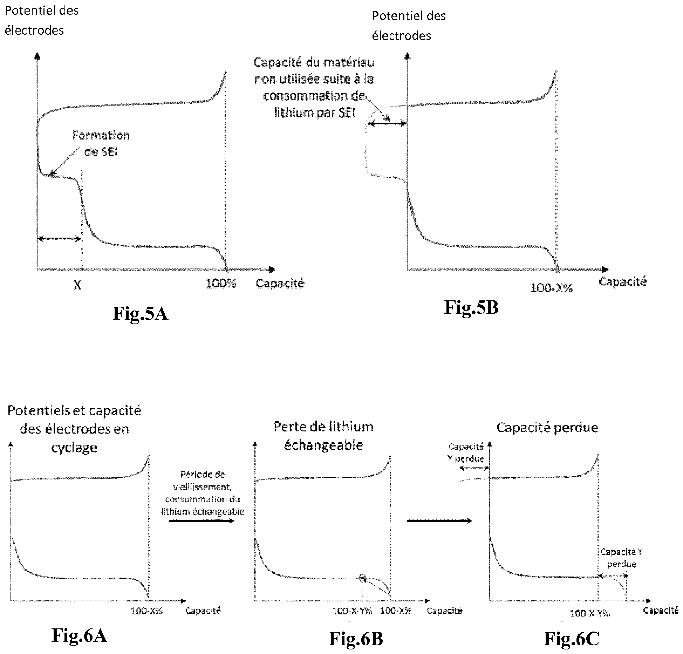

On a représenté aux figures 5A et 5B, les courbes de potentiel des électrodes (cathode en haut et anode en bas) d'un accumulateur Li-ion en fonction de la capacité en lithium échangeable, respectivement à une capacité initiale correspondant à 100% de l'état de charge et à une capacité réduite correspondant à 100-x % de l'état de charge avec une perte de x% de charge à l'électrode négative générée par la consommation d'ions lithium échangeables.

Comme illustré en figure 5B comparativement à la figure 5A, les potentiels des matériaux actifs d'électrode ne sont plus capables d'atteindre les valeurs initiales des états de charge extrêmes de l'accumulateur (0 et 100%) par lithiation/délithiation en raison du manque d'ions lithium échangeables. Autrement dit, du fait de la formation du film SEI, les électrodes ne sont utilisées que partiellement, comme schématisé en figure 5B par les courbes situées à gauche de l'axe des ordonnées qui représentent le potentiel non exploré par les électrodes au cours de l'utilisation de l'accumulateur. Ce mode de fonctionnement de l'accumulateur n'est donc pas optimal, puisqu'une partie fonctionnelle des matériaux ne prend pas part au stockage des ions. La capacité déployée par l'accumulateur ne représente plus que 100-X% de la capacité initiale en lithium échangeable.

Il est également connu que la formation de SEI peut se produire lentement au cours de l'utilisation de l'accumulateur. Ce phénomène se produit généralement sur l'anode à bas potentiel, lorsque l'accumulateur est complètement chargé. La figure 6B montre schématiquement la consommation de lithium échangeable, au cours d'une période de vieillissement de l'accumulateur chargé, due à la formation lente de SEI depuis la formation de SEI initiale de la figure 6A, qui correspond à la figure 5B.

Comme montré en figure 6C, la capacité restante et les potentiels des électrodes, sont à nouveau amoindris. La capacité de l'accumulateur est alors fonction de la part de lithium échangeable restant, à hauteur de 100-X-Y% de la quantité initiale.

De plus, ces pertes de capacité engendrées peuvent induire l'apparition d'autres phénomènes dégradants pour ces matériaux.

Dans le cas où les états de charges extrêmes ont des valeurs réduites de X+Y% du fait du manque d'ions lithium échangeables, le système électronique de gestion de la batterie (BMS) n'arrête pas les applications de courant suffisamment tôt, ce qui induit des surtensions sur les matériaux d'insertion actifs, ce qui entraîne leur dégradation. On rappelle ici que le BMS (acronyme anglais de « *Battery Management System* ») a notamment pour fonction d'arrêter les applications de courant dès l'atteinte de valeurs de tension seuil, i.e. une différence de potentiels entre les deux matériaux d'insertion actifs.

Le BMS stoppe donc les applications de courant (charge, décharge) dès l'atteinte de tensions (différence des potentiels des deux matériaux actifs) seuils. Or, les potentiels des matériaux actifs, non mesurables par le BMS, n'atteignent plus les valeurs seuils des états de charge initiaux extrêmes de l'accumulateur (0 et 100%) en raison du manque d'ions lithium échangeables. Les applications de courant ne sont pas stoppées assez tôt dans les états de charge extrême, ce qui induit également des surtensions sur les matériaux actifs, entraînant leurs dégradations structurales et chimiques.

Certains documents de l'état de l'art ont déjà identifiés le problème de perte de capacité des accumulateurs Li-Ion par le manque d'ions lithium échangeables. Les solutions proposées permettent de réinjecter des ions lithium pour compenser ce manque.

Le brevet JP2012089471 propose d'insérer depuis l'extérieur d'un accumulateur Li-ion, à travers son emballage, un équipement, sous la forme d'une seringue, adaptée pour réinjecter des ions lithium Li$^+$. Plus précisément, la seringue comporte une chambre contenant un produit électrolyte lui-même en contact avec le tube d'injection qui permet d'avoir une continuité ionique entre le produit et les matériaux actifs de batterie par remplissage d'électrolyte. Le tube d'injection est conducteur électronique afin de permettre un échange d'électrons entre un matériau actif d'accumulateur et le composé réducteur. Ce dernier a un potentiel d'oxydo-réduction faible pour engendrer spontanément une réaction avec l'un des matériaux actifs des deux électrodes de l'accumulateur. Ainsi, par la mise en contact entre le matériau d'insertion actif de l'une des électrodes et le produit, il est possible de réinsérer des ions lithium dans les matériaux actifs, par conduction ionique et électronique. Cette solution nécessite une conception d'accumulateurs qui intègre un organe de pénétration du tube d'injection au travers de l'emballage. La fragilité de l'accumulateur est donc plus importante, le risque de fuite est non négligeable.

Les demandes de brevet WO201224211, EP2595235 et JP2011076930, proposent quant à elles d'intégrer dans un accumulateur Li-ion, une troisième électrode, c'est-à-dire une électrode supplémentaire à l'anode et la cathode d'une cellule électrochimique. La troisième électrode ainsi intégrée est adaptée pour contenir des ions lithium qu'il est possible d'extraire pour les injecter dans les matériaux d'insertion actifs de l'accumulateur. Cette opération est effectuée électrochimiquement, par l'application d'un courant entre cette troisième électrode et l'une choisie parmi l'anode ou la cathode de l'accumulateur. Cette solution nécessite donc l'ajout d'une électrode supplémentaire, ce qui a comme inconvénient d'ajouter du volume et du poids à l'accumulateur. Il est aussi nécessaire d'ajouter une troisième borne de sortie à l'architecture des accumulateurs reliée électriquement à la troisième électrode, afin d'appliquer le courant entre cette troisième électrode et celle dans laquelle les ions lithium sont réinjectés pour régénérer la capacité initiale. Cette troisième borne de sortie doit être nécessairement réalisée en formant une traversée, c'est-à-dire avec l'élément conducteur électrique isolé de la paroi de l'emballage, qui soit étanche. Cette solution présente donc l'inconvénient majeur de complexifier l'architecture des accumulateurs Li-ion.

La demande de brevet FR3017248 propose l'utilisation de l'emballage comme stockage d'ions métalliques au sein de l'accumulateur pour la régénération de la capacité. Si cette solution peut être satisfaisante dans bon nombre de cas, elle présente deux inconvénients majeurs. Le premier concerne l'homogénéité de relarguage des ions au sein des matériaux électrochimiquement actifs. En effet, les ions provenant de l'emballage pénètrent difficilement au cœur de l'accumulateur pendant la phase de régnération. Le second inconvénient concerne la tenue mécanique de l'emballage qui est fortement diminuée après la phase de relarguage, ce qui peut entrainer une rupture plus facile lorsque l'accumulateur est dans un environnement contraignant.

US 2012/045670 A1 divulgue un alliage étain-lithium pour le matériau du mandrin d'enroulement d'un accumulateur.

US 2011/041324 A1 divulgue un alliage aluminium-lithium pour le matériau du mandrin d'enroulement d'un accumulateur.

Il existe donc un besoin d'améliorer encore les solutions existantes de régénération de la capacité d'un accumulateur au lithium, tel qu'un accumulateur Li-ion, lorsque cela est diagnostiqué comme nécessaire notamment pour augmenter, à sa valeur initiale, la quantité de lithium échangeable, afin d'éviter l'apparition de surtensions dues au manque de lithium échangeable, et d'augmenter sa durée de vie.

Le but de l'invention est de répondre au moins en partie à ce besoin.

Exposé de l'invention

Pour ce faire, l'invention a pour objet selon un premier de ses aspects, un procédé de régénération de la capacité d'un accumulateur électrochimique métal-ion, comportant au moins une cellule électrochimique comportant une cathode, une anode, et un séparateur imprégné d'un électrolyte entre l'anode et la cathode, deux collecteurs de courant dont un est relié à l'anode et l'autre à la cathode, et un boitier agencé pour loger la cellule électrochimique avec étanchéité tout en étant traversé par une partie des collecteurs de courant formant les bornes de sortie, la cellule étant enroulée sur elle-même autour d'un axe d'enroulement, dit mandrin, comportant au moins une zone de stockage d'ions métalliques, le mandrin étant en aluminium lithié électrochimiquement avec une lithiation d'au plus 30%, une continuité électrique étant assurée entre la zone de stockage et l'extérieur de l'accumulateur, le procédé comportant les étapes suivantes :

a/ évaluation de la quantité d'ions métalliques échangeables,

b/ lorsque la quantité d'ions métal évaluée est inférieure ou égale à une valeur seuil, application d'un courant électrique entre la cathode ou l'anode et le mandrin de sorte à provoquer la désinsertion d'ions métalliques du mandrin et par là l'insertion dans le matériau électrochimique actif de l'anode et/ou de la cathode,

un élément à la fois d'isolation électrique et de conduction ionique étant en outre disposé entre les électrodes d'anode et de cathode d'une part et le mandrin d'autre part.

Comme évoqué en préambule, la consommation d'ions métalliques dans une électrode d'un accumulateur métal-ion (anode pour un accumulateur Li-ion) génère un manque d'ions échangeables et provoque donc une perte de capacité et l'apparition de phénomènes de surtension entrainant un vieillissement des matériaux d'insertion de plus en plus évolutif au cours du temps.

La solution selon la présente invention permet de réinjecter des ions échangeables dans au moins un des matériaux actifs d'électrode afin de régénérer la capacité perdue de l'accumulateur et d'éviter l'apparition de surtensions dégradantes des électrodes en fin de charge ou décharge.

La solution selon la présente invention met en œuvre un stockage des ions-lithium dans un composant existant de l'accumulateur, à savoir le mandrin autour duquel la cellule électrochimique est enroulée lors de la fabrication de l'accumulateur. Ainsi, la solution de régénération de capacité selon la présente invention a pour avantage primordial de ne pas complexifier l'architecture de l'accumulateur,

L'invention consiste tout d'abord à évaluer la quantité de lithium perdue, c'est-à-dire le manque d'ions lithium échangeables.

Le procédé selon la présente invention nécessite seulement une architecture d'accumulateur spécifique.

La solution du mandrin selon l'invention ne nécessite pas de propriété mécanique spécifique au cours de l'utilisation de la batterie et sa position centrale au sein de l'accumulateur permet des avantages supplémentaires par rapport à la solution de zone de stockage par le boitier comme décrit dans la demande de brevet FR3017248: elle permet de réinjecter de façon homogène les ions dans le(s) matériau(x) actif(s) de ou des électrodes pour la régénération de la capacité de l'accumulateur et ce sans avoir à garantir une tenue mécanique accrue.

Le mandrin selon l'invention est en tout ou partie constitué d'un matériau de régénération permettant le stockage d'ions pour sa fonction de régénération. Le choix du matériau constituant le mandrin doit être également fait afin de lui garantir de bonnes performances mécaniques Par exemple, sa bonne tenue mécanique ainsi que sa capacité à être lithié électrochimiquement, c'est-à-dire à permettre l'obtention d'un alliage aluminium-lithium, font de l'aluminium un très bon candidat pour la réalisation d'un mandrin utilisable pour la régénération des accumulateurs li-ion.

Autrement dit, le choix du matériau constituant la zone du stockage du mandrin qui forme un alliage avec les ions métal insérés permet non seulement de servir de stockage d'ions métal mais également de garantir au mandrin de bonnes performances mécaniques, ce qui est primordial dans le cadre d'accumulateurs métal-ion.

Ensuite, afin de permettre l'extraction des ions du matériau de régénération par l'imposition d'un courant pendant les phases de régénération, l'intégration du mandrin de régénération selon l'invention, doit être faite de sorte qu'on assure :

- une continuité électrique entre le matériau de régénération du mandrin et l'extérieur de l'accumulateur, par exemple au moyen d'une borne supplémentaire;

- aucun contact électrique direct entre le matériau de régénération du mandrin et les électrodes de l'accumulateur ;
- une conduction ionique entre le matériau de régénération du mandrin et les électrodes afin de permettre aux ions métalliques d'être réinjectés au sein de l'accumulateur dans une quantité d'ions qu'il est possible d'échanger.

Cette conduction ionique est assurée par un élément à la fois d'isolation électrique et de conduction ionique étant en outre disposé entre les électrodes d'anode et de cathode d'une part et le mandrin d'autre part.

Avantageusement, l'isolation électrique et la conduction ionique entre les électrodes et le matériau de régénération peuvent être assurées par un matériau de type séparateur imprégné d'électrolyte agencé entre le matériau d'insertion de l'anode et celui de la cathode.

Enfin, le matériau constitutif du mandrin est conducteur électronique et comporte au moins une zone de stockage d'ions métallique au sein de sa structure.

Ainsi, on prévoit selon l'invention d'intégrer une quantité d'ions métalliques apte à compenser le manque d'ions échangeables directement dans le mandrin avant l'assemblage final de l'accumulateur.

L'évaluation du manque d'ions échangeables, la modification de l'architecture de l'accumulateur et de son mandrin avec au moins une zone de stockage d'ions prévus selon l'invention permettent alors soit au BMS, soit à un opérateur de maintenance de l'accumulateur d'effectuer une désinsertion du mandrin par l'application d'un courant électrique entre la cathode ou l'anode de l'accumulateur et le mandrin. Les ions extraits de leur zone de stockage dans le mandrin sont alors insérés dans le matériau d'insertion actif de l'accumulateur, ce qui permet de récupérer des ions échangeables. La capacité de l'accumulateur s'en trouve directement régénérée.

L'application du courant selon l'étape b/ est de préférence réalisée avec régulation au moyen d'un dispositif électronique.

L'invention concerne également sous un autre de ses aspects un accumulateur (A) métal-ion, tel qu'un accumulateur Li-ion, comportant :

- au moins une cellule électrochimique C comportant, une cathode, une anode et un séparateur, imprégné d'un électrolyte, entre l'anode et la cathode, la cellule étant enroulée sur elle-même autour d'un axe d'enroulement, dit mandrin, comportant au moins une zone de stockage d'ions métalliques, le mandrin étant en aluminium lithié électrochimiquement avec une lithiation d'au plus 30%, une continuité électrique étant assurée entre la zone de stockage et l'extérieur de l'accumulateur,
- deux collecteurs de courant dont un est relié à l'anode et l'autre à la cathode,
- un boitier agencé pour loger la cellule électrochimique enroulée avec étanchéité tout en étant traversé par une partie des collecteurs de courant formant les bornes de sortie,
- un élément à la fois d'isolation électrique et de conduction ionique entre les électrodes d'anode et de cathode de la cellule électrochimique d'une part et le mandrin d'autre part.

L'accumulateur selon l'invention peut être un accumulateur Lithium-ion, Sodium-ion, Magnésium-ion, ou Aluminium-ion.

Selon une première variante, l'élément d'isolation électrique et de conduction ionique est avantageusement constitué d'au moins un film en matériau polymère, par exemple choisi parmi polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

Selon une deuxième variante, l'élément d'isolation électrique et de conduction ionique est une couche protectrice déposée sur la face externe du mandrin. A titre d'exemple, cette couche protectrice peut être une couche d'oxyde, de carbonate, une céramique...

Quelle que soit la variante, l'élément d'isolation électrique et de conduction ionique doit isoler les deux potentiels d'électrode de l'accumulateur de celui du mandrin. Dans un mode de réalisation ne faisant pas partie de l'invention, le matériau du mandrin peut être choisi parmi le lithium métallique ou un matériau d'insertion du lithium, de préférence un oxyde de titane lithié ($Li_7Ti_5O_{12}$), du graphite, un oxyde mixte de métaux de transition un phosphate de fer lithié ($LiFePO_4$), ou encore un métal formant un alliage avec le lithium, de préférence un alliage aluminium-lithium de formule LixAl avec x compris entre 0 et 1, un alliage silicium-lithium, un alliage bismuth-lithium, un alliage étain-lithium.

Les inventeurs ont réalisé des essais qui ont permis de montrer qu'un mandrin en aluminium peut être lithié par voie électrochimique, conduisant à l'obtention d'un alliage aluminium-lithium de formule LixAl avec x compris entre 0 et 1. L'alliage peut ainsi être formé sur une partie de l'épaisseur extérieure du mandrin avec la concentration en lithium qui diminue avec la pénétration dans l'épaisseur et ce, de façon homogène sur toute la surface externe du mandrin.

Dans les modes de réalisation avantageux d'un accumulateur Li-ion, les définitions suivantes s'appliquent.

Par « anode ou cathode en matériau d'insertion au Lithium », on entend une électrode comportant au moins un matériau d'insertion au lithium et éventuellement, au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiM_y(XO_z)_n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des nombres positifs.

Par « matériau d'insertion au lithium », en particulier pour l'électrode négative, on entend également un matériau choisi parmi: oxyde de titane lithié ou non, par exemple $Li_4Ti_5O_{12}$ ou $TiO_2$. Plus particulièrement, le matériau d'électrode négative peut être choisi parmi les matériaux carbonés, les oxydes de titane non lithiès et leurs dérivés et les oxydes de titane lithiés tels que $Li_4Ti_5O_{12}$ et leurs dérivés et un mélange de ceux-ci.

Par « dérivé lithié », on entend des composés de formule $Li_{(4-x1)}M_{xl}Ti_5O_{12}$ et $Li_4Ti_{(5-y1)}N_{y1}O_{12}$, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici $Ti_{(5-y1)}N_{y1}O_{12}$, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Selon une variante de réalisation, toutes les anodes sont en graphite et les cathodes en $LiFePO_4$.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate $(CF_3SO_3)$, bis (trifluorométhanesulfonate) imide $[(CF_3SO_2)_2N]$ et tris(trifluorométhanesulfonate) méthide $[(CF_3SO_2)_3C]$.

Description détaillée

D'autres avantages et caractéristiques ressortiront mieux à la lecture de la description détaillée, faite à titre illustratif en référence aux figures suivantes parmi lesquelles:

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective et par transparence d'un accumulateur lithium-ion avec son emballage souple selon l'état de l'art ;
- la figure 4 est une vue en perspective d'un accumulateur lithium-ion cylindrique selon l'état de l'art avec son emballage rigide constitué d'un boitier ;
- les figures 5A et 5B illustrent les courbes de potentiel des électrodes (cathode en haut et anode en bas) d'un accumulateur Li-ion en fonction de la capacité de lithium échangeable, respectivement au cours de la première charge à une capacité initiale correspondant à 100% de l'état de charge et après cette première charge, à une capacité réduite correspondant à 100-x % de l'état de charge avec une perte de x% de charge à l'électrode négative générée par le manque d'ions lithium échangeables consommés lors de la première charge dite étape de formation;
- les figures 6A à 6C illustrent les courbes de potentiel des électrodes (cathode en haut et anode en bas) d'un accumulateur Li-ion en fonction de la capacité de lithium échangeable;
- la figure 7 est une vue schématique en perspective avec arraché partiel d'un accumulateur lithium-ion selon l'invention avec son le mandrin conforme à l'invention.

Par souci de clarté, les mêmes références désignant les mêmes éléments d'un accumulateur Li-ion selon l'état de l'art et selon l'invention sont utilisées pour toutes les figures 1 à 7.

On précise que les différents éléments selon l'invention sont représentés uniquement par souci de clarté et qu'ils ne sont pas à l'échelle.

Les figures 1 à 6C ont déjà été commentées en détail en préambule. Elles ne sont donc pas décrites ci-après.

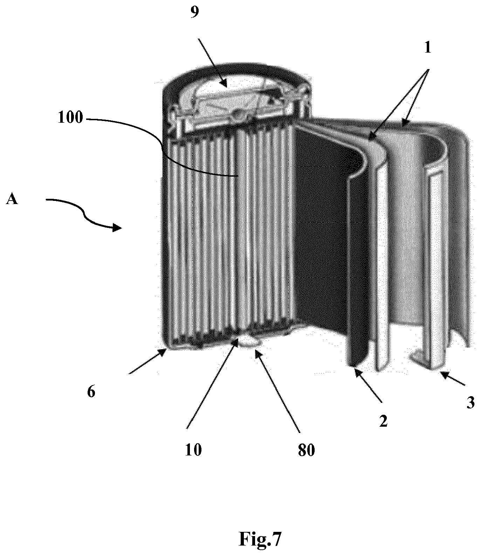

Un accumulateur selon l'invention est représenté en figure 7. Il comporte une moins une cellule électrochimique C constituée d'un séparateur 1 imprégné d' un constituant électrolyte entre une cathode 2 et une anode 3, un collecteur de courant non représenté connecté à la cathode 2, un collecteur de courant non représenté connecté à l'anode 3 et enfin, un boitier 6 en tant qu'emballage agencé pour contenir la cellule électrochimique avec étanchéité tout en étant traversé par une partie des collecteurs de courant 40, 50, formant les bornes de sortie.

La cellule C est enroulée autour d'un axe d'enroulement 10, ou mandrin.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant. Chacune des bornes de sortie (pôles), non représentées passent à travers le couvercle 9 avec interposition d'un joint non représenté qui isole électriquement la borne positive respectivement négative du couvercle 9. Autrement dit, les deux bornes sont isolées électriquement du boitier 6.

L'accumulateur comporte en outre un élément non représenté, sous la forme d'un film à la fois d'isolation électrique et de conduction ionique entre l'anode 3 et cathode 2 de la cellule électrochimique et le boitier 6.

Selon l'invention, le mandrin 10 comporte une zone de stockage d'ions lithium 100 réalisée sous la forme d'un alliage lithié formé sur au moins une partie de l'épaisseur externe du mandrin 10. La concentration en lithium peut diminuer depuis la face externe du mandrin 10 et de façon homogène sur toute cette surface. Avantageusement, la zone de stockage 100 constitue toute la périphérie externe du mandrin 10.

Enfin, le fond 8 du boitier 6 comporte une borne 80 qui est raccordée électriquement au mandrin 10 et qui permet la régénération de la capacité de l'accumulateur comme expliqué ci-après.

On a réalisé un exemple d'un accumulateur selon l'invention à partir d'une géométrie cylindrique d'une cellule bobinée, de 26 mm de diamètre, de 65 mm de hauteur et d'une capacité initiale d'environ 2,5 Ah.

Les matériaux d'électrodes sont du graphite pour l'anode 3 et en lithium phosphate de fer ($LiFePO_4$) pour la cathode 2.

Le mandrin central 10 est constitué initialement d'aluminium d'une masse de 4 g. L'aluminium constitutif du mandrin 10 est le matériau de régénération du lithium de l'accumulateur. L'aluminium a la capacité de former un alliage électrochimique avec le lithium de formule $Li_xAl$ (avec x variant entre 0 et 1).

Avant la fabrication de l'accumulateur, il est nécessaire d'insérer dans le mandrin 10, la quantité adéquate des ions lithium. Cette dernière correspond à la quantité de capacité que l'on décide de régénérer, à condition de respecter une limite de lithiation du matériau de régénération.

Dans l'exemple de mandrin en aluminium, les essais des inventeurs ont montré que pour conserver une tenue mécanique suffisante, il ne faut pas dépasser environ 20-30% de lithiation de l'aluminium.

En connaissant la capacité initiale, on peut calculer la quantité d'ions lithium échangeables contenu dans l'accumulateur par le calcul suivant:

$$C*3600*M_{Li} / F.$$

Avec les valeurs respectives suivantes :

$M_{Li}$ = 6,9g/mol (masse molaire du lithium),
F = 96500C/mol ou A.S/mol (nombre de Faraday),
et C = 2,5Ah.

L'accumulateur contient une quantité d'ions lithium échangeables égale à 0,644 g.

Il est aussi possible de calculer la masse d'atomes de lithium que l'on peut stocker dans le mandrin 10 de cet accumulateur dans le cas d'une lithiation totale du mandrin en aluminium, soit un alliage Li Al, par le calcul suivant:

$$m_{Al} * M_{Li} /M_{Al,}$$

Avec une masse $m_{Al}$ du mandrin 10 égale à 4g et une masse molaire de l'aluminium $M_{Al}$ égale à 27g/mol, on obtient une quantité égale à 1,022g de lithium apte à être stocker, c'est-à-dire une quantité supérieure à la quantité d'ions lithium échangeables utilisé initialement par l'accumulateur.

Pour une régénération de la capacité de l'accumulateur d'environ 50%, le mandrin 10 est donc largement suffisant en tant que zone de stockage ou réservoir de lithium de régénération. En effet, les inventeurs considèrent qu'il est raisonnable de stocker environ la moitié de la quantité de lithium échangeable.

Au-delà de cette quantité de lithium réinjectée dans l'accumulateur, d'autres phénomènes de dégradation seront prépondérants et il ne sera plus possible de régénérer l'accumulateur selon le procédé de l'invention.

De plus, une lithiation totale du mandrin 10 aboutirait à un matériau dont les propriétés mécaniques ne sont pas satisfaisantes pour les applications visées pour l'accumulateur.

Ainsi, dans le cas d'une zone de stockage de lithium embarquée représentant 20% de la capacité de l'accumulateur, il est nécessaire d'embarquer une masse de lithium égale à 0,129g, l'alliage obtenu étant de formule $Li_{0,126}Al$ (pour une lithiation homogène dans le volume du mandrin 10).

En pratique, l'utilisation d'un tel accumulateur dont le mandrin 10 est isolé des deux électrodes 2, 3 et lithié au cours de sa fabrication, permet la réinjection des ions $Li^+$ dans la quantité de lithium échangeable. Cette opération est réalisée par le passage d'un courant entre la borne de régénération 80 du mandrin 10 et une des deux électrodes 2 ou 3.

Le courant appliqué lors de cette phase doit induire l'oxydation du mandrin pour provoquer l'extraction des ions lithium de l'aluminium et leur insertion dans l'électrode de l'accumulateur.

La capacité initiale de l'accumulateur est alors régénérée.

Dans un exemple selon l'invention, il est possible de régénérer une quantité définie de la capacité de l'accumulateur Li-ion par l'insertion d'ions $Li^+$ dans la cathode 2. L'insertion d'ions $Li^+$ peut aussi se faire dans l'anode 3.

Après avoir calculé la quantité de capacité à régénérer, on connecte alors électriquement le mandrin 10 et la cathode 2 à un dispositif électronique non représenté adapté pour réguler le courant. En effet, comme le potentiel d'oxydo-réduction de l'électrode positive de lithium phosphate de fer (supérieur à environ 2V *vs* Li⁺/Li) est supérieur à celui de l'aluminium lithié (supérieur à environ 0,360V *vs* Li⁺/Li), et que l'architecture permet un échange ionique entre ces deux composants, un courant négatif va s'établir aboutissant au phénomène voulu de réinjection de lithium échangeable.

Le dispositif électronique permet la régulation d'un courant entre le mandrin 10 et la cathode 2.

Avantageusement, ce dispositif peut aussi intégrer le courant en fonction du temps, afin de calculer la capacité de régénération. Préférentiellement, le courant doit être très faible, afin de permettre une réinsertion d'ions lithium de manière homogène au sein du matériau actif, et aussi pour ne pas déstructurer le matériau métallique du mandrin 10.

Ce dispositif peut être intégré au BMS, ou piloté par un opérateur extérieur désirant effectuer la régénération de l'accumulateur.

Le courant limité est calculé par rapport à la capacité d'ions lithium intégrés dans le mandrin 10.

Dès l'atteinte de la quantité de lithium à insérer obtenue, 1,022g de lithium dans l'exemple précédent, un cycle de charge/décharge de l'accumulateur peut être réalisé afin de vérifier que la régénération est effective.

L'obtention du mandrin 10, contenant des ions lithiums stockés sur sa face externe 100, doit être réalisée avant la conception de l'accumulateur par des procédés de lithiation. Par exemple, il est envisageable d'effectuer une lithiation électrochimique. La conception métallurgique d'un alliage d'aluminium contenant du lithium peut aussi être envisagée.

La figure 6A représente la capacité déjà réduite par la première charge, dite étape de formation, d'un accumulateur Li-ion, qui est une capacité réduite correspondant à 100-x % de l'état de charge avec perte de x% de charge.

La figure 6B schématise la perte de capacité de y% au cours d'une période de vieillissement, qui s'exprime par le déplacement du potentiel de l'électrode négative en raison de la consommation du lithium échangeable sur cette électrode.

La figure 6C représente les potentiels des électrodes en fonction de la capacité restante de 100-x-y% après cette période de vieillissement.

L'invention n'est pas limitée aux exemples qui viennent d'être décrits ; on peut notamment combiner entre elles des caractéristiques des exemples illustrés au sein de variantes non illustrées.

L'invention est définie par les revendications.

Bien que décrite en référence à un accumulateur Li-ion, l'invention peut tout aussi bien s'appliquer à tout générateur électrochimique métal-ion fonctionnant sur le principe d'insertion-désinsertion d'ions métallique.

## Revendications

1. Procédé de régénération de la capacité d'un accumulateur électrochimique métal-ion, comportant au moins une cellule électrochimique comportant une cathode (2), une anode (3), et un séparateur (1) imprégné d'un électrolyte entre l'anode et la cathode, deux collecteurs de courant dont un (50) est relié à l'anode et l'autre (40) à la cathode, et un boitier (6) agencé pour loger la cellule électrochimique avec étanchéité tout en étant traversé par une partie des collecteurs de courant formant les bornes de sortie, la cellule étant enroulée sur elle-même autour d'un axe d'enroulement (10), dit mandrin, comportant au moins une zone (100) de stockage d'ions métalliques, le mandrin étant en aluminium lithié électrochimiquement avec une lithiation d'au plus 30%, une continuité électrique étant assurée entre la zone de stockage et l'extérieur de l'accumulateur, le procédé comportant les étapes suivantes :

   a/ évaluation de la quantité d'ions métalliques échangeables,
   b/ lorsque la quantité d'ions métal évaluée est inférieure ou égale à une valeur seuil, application d'un courant électrique entre la cathode ou l'anode et le mandrin de sorte à provoquer la désinsertion d'ions métalliques du mandrin et par là l'insertion dans le matériau électrochimique actif de l'anode et/ou de la cathode,

   un élément à la fois d'isolation électrique et de conduction ionique étant en outre disposé entre les électrodes d'anode et de cathode d'une part et le mandrin d'autre part.

2. Procédé de régénération selon la revendication 1, l'application du courant b/ étant réalisée avec régulation au moyen d'un dispositif électronique.

3. Accumulateur (A) électrochimique métal-ion, tel qu'un accumulateur Li-ion, comportant :

   - au moins une cellule électrochimique C comportant, une cathode (2), une anode (3) et un séparateur (1), imprégné d'un électrolyte, entre l'anode et la cathode, la cellule étant enroulée sur elle-même autour d'un axe d'enroulement (10), dit mandrin, comportant au moins une zone (100) de stockage d'ions métalliques, le mandrin étant en aluminium lithié électrochimquement avec une lithiation d'au plus 30%, une continuité électrique étant assurée entre la zone de stockage et l'extérieur de l'accumulateur,
   - deux collecteurs de courant dont un (50) est relié à l'anode et l'autre (40) à la cathode,
- un boitier (6) agencé pour loger la cellule électrochimique enroulée avec étanchéité tout en étant traversé par une partie des collecteurs de courant formant les bornes de sortie,
- un élément à la fois d'isolation électrique et de conduction ionique entre les électrodes d'anode et de cathode de la cellule électrochimique d'une part et le mandrin d'autre part.

4. Accumulateur selon la revendication 3, l'élément d'isolation électrique et de conduction ionique étant constitué d'au moins un film en matériau polymère choisi parmi polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

5. Accumulateur selon la revendication 3, l'élément d'isolation électrique et de conduction ionique étant une couche protectrice déposée sur la face externe du mandrin.

**Patentansprüche**

1. Verfahren zur Regeneration der Kapazität eines Metall-Ion-Akkumulators, umfassend mindestens eine elektrochemische Zelle, umfassend eine Kathode (2), eine Anode (3) und einen Separator (1), der mit einem Elektrolyten imprägniert ist, zwischen der Anode und der Kathode, zwei Stromkollektoren, von denen einer (50) mit der Anode und der andere (40) mit der Kathode verbunden ist, und ein Gehäuse (6), das eingerichtet ist, um die elektrochemische Zelle unter Abdichtung aufzunehmen, wobei es gleichzeitig von einem Teil der Stromkollektoren durchquert wird, die Ausgangsanschlüsse bilden, wobei die Zelle auf sich selbst um eine Wickelachse (10) aufgewickelt ist, die als Spindel bezeichnet wird, umfassend mindestens ein Gebiet (100) zum Speichern von Metallionen, wobei die Spindel aus elektrochemisch lithiiertem Aluminium mit einer Lithiierung von mehr als 30 % ist, wobei eine elektrische Kontinuität zwischen dem Speichergebiet und der Außenseite des Akkumulators sichergestellt wird, wobei das Verfahren die folgenden Schritte umfasst:

    a/ Evaluieren der Menge an austauschbaren Metallionen,
    b/ wenn die evaluierte Menge an Metallionen kleiner oder gleich einem Schwellenwert ist, Anlegen eines elektrischen Stroms zwischen der Kathode oder der Anode und der Spindel derart, dass die Desinsertion der Metallionen von der Spindel und dadurch die Insertion in das aktive elektrochemische Material der Anode und/oder der Kathode hervorgerufen werden, wobei außerdem ein Element, das gleichzeitig elektrisch isolierend und ionisch leitend ist, zwischen den Elektroden der Anode und der Kathode einerseits und der Spindel andererseits angeordnet ist.

2. Verfahren zur Regeneration nach Anspruch 1, wobei das Anlegen des Stroms b/ mit einer Regulierung durch eine elektronische Vorrichtung durchgeführt wird.

3. Elektrochemischer Metall-Ion-Akkumulator (A), wie ein Li-Ion-Akkumulator, umfassend:

    - mindestens eine elektrochemische Zelle C, umfassend eine Kathode (2), eine Anode (3) und einen Separator (1), der mit einem Elektrolyten imprägniert ist, zwischen der Anode und der Kathode, wobei die Zelle auf sich selbst um eine Wickelachse (10) aufgewickelt ist, die als Spindel bezeichnet wird, umfassend mindestens ein Gebiet (100) zum Speichern von Metallionen, wobei die Spindel aus elektrochemisch lithiiertem Aluminium mit einer Lithiierung von mehr als 30 % ist, wobei eine elektrische Kontinuität zwischen dem Speichergebiet und der Außenseite des Akkumulators sichergestellt wird,
    - zwei Stromkollektoren, von denen einer (50) mit der Anode und der andere (40) mit der Kathode verbunden ist,
    - ein Gehäuse (6), das eingerichtet ist, um die aufgewickelte elektrochemische Zelle unter Abdichtung aufzunehmen, wobei es gleichzeitig von einem Teil der Stromkollektoren durchquert wird, die Ausgangsanschlüsse bilden,
    - ein Element, das gleichzeitig elektrisch isolierend und ionisch leitend ist, zwischen den Elektroden der Anode und der Kathode der elektrochemischen Zelle einerseits und der Spindel andererseits.

4. Akkumulator nach Anspruch 3, wobei das elektrisch isolierende und ionisch leitende Element aus mindestens einem Film aus einem Polymermaterial besteht, ausgewählt aus Polyvinylidenfluorid (PVDF), Polyvinylacetat (PVA), Polymethylmethacrylat (PMMA), Polyoxyethylen (POE), Polyethylenterephthalat (PET), einem Polymer, ausgewählt aus Polyolefinen, wie Polypropylen, Polyethylen, Cellulose.

5. Akkumulator nach Anspruch 3, wobei das elektrisch isolierende und ionisch leitende Element eine Schutzschicht ist, die auf der Außenfläche der Spindel abgeschieden ist.

## Claims

1. Method for regenerating the capacity of a metal-ion electrochemical accumulator, including at least one electrochemical cell including a cathode (2), an anode (3) and a separator (1) impregnated with an electrolyte between the anode and the cathode, two current collectors, one (50) of which is connected to the anode and the other (40) of which is connected to the cathode, and a casing (6) suitable for housing the electrochemical cell in a sealtight manner while having a portion of the current collectors forming the output terminals passing therethrough, the cell being wound up on itself around a winding axis (10), referred to as a core, including at least one zone (100) for storing metal ions, the core being made of electrochemically lithiated aluminium with a degree of lithiation of at most 30%, electrical continuity being provided between the storage zone and the exterior of the accumulator, the method including the following steps:

   a) evaluating the quantity of exchangeable metal ions,
   b) if the evaluated quantity of metal ions is smaller than or equal to a threshold value, applying an electric current between the cathode or the anode and the core so as to bring about the disinsertion of metal ions from the core and thereby insertion into the active electrochemical material of the anode and/or of the cathode,
   an element that is both an electrical insulator and an ion conductor additionally being arranged between the anode and cathode electrodes on one side and the core on the other side.

2. Regenerating method according to Claim 1, the application of the current b) being performed with regulation by an electronic device.

3. Metal-ion electrochemical accumulator (A), such as an Li-ion accumulator, including:

   - at least one electrochemical cell C including a cathode (2), an anode (3) and a separator (1), impregnated with an electrolyte, between the anode and the cathode, the cell being wound up on itself around a winding axis (10), referred to as a core, including at least one zone (100) for storing metal ions, the core being made of electrochemically lithiated aluminium with a degree of lithiation of at most 30%, electrical continuity being provided between the storage zone and the exterior of the accumulator,
   - two current collectors, one (50) of which is connected to the anode and the other (40) of which is connected to the cathode,

   - a casing (6) suitable for housing the electrochemical cell in a sealtight manner while having a portion of the current collectors forming the output terminals passing therethrough,
   - an element that is both an electrical insulator and an ion conductor between the anode and cathode electrodes of the electrochemical cell on one side and the core on the other side.

4. Accumulator according to Claim 3, the electrically insulating and ion-conducting element consisting of at least one film made of polymer material chosen from polyvinylidene fluoride (PVDF), polyvinyl acetate (PVA), polymethyl methacrylate (PMMA), polyoxyethylene (POE), polyethylene terephthalate (PET), or a polymer chosen from polyolefins such as polypropylene, polyethylene and cellulose.

5. Accumulator according to Claim 3, the electrically insulating and ion-conducting element being a protective layer deposited on the outer face of the core.

**Fig.1**

**Fig.2**

**Fig.3**

**Fig.4**

Potentiel des
électrodes

Potentiel des
électrodes

Capacité du matériau
non utilisée suite à la
consommation de
lithium par SEI

Formation
de SEI

X                    100%    Capacité

100-X%    Capacité

**Fig.5A**

**Fig.5B**

Potentiels et capacité
des électrodes en
cyclage

Perte de lithium
échangeable

Capacité perdue

Période de
vieillissement,
consommation du
lithium échangeable

Capacité
Y perdue

100-X%    Capacité

100-X-Y%  100-X%   Capacité

Capacité Y
perdue

100-X-Y%    Capacité

**Fig.6A**

**Fig.6B**

**Fig.6C**

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- WO 2010113502 A
- US 2010316094 A
- JP 2012089471 B
- WO 201224211 A
- EP 2595235 A
- JP 2011076930 B
- FR 3017248
- US 2012045670 A1
- US 2011041324 A1